# EUROPÄISCHE PATENTANMELDUNG

(11) **EP 1 591 352 A1**
(43) Veröffentlichungstag der Anmeldung: **02.11.2005**
(21) Anmeldenummer: 04012316.8
(22) Anmeldetag: 25.05.2004
(51) Int. Cl.: B62K 15/00, B62K 9/02, B62K 9/00, B62K 3/00

(54) **Einklappbarer Rahmen für ein Dreirad, Laufrad oder Kinderfahrrad**

(30) Priorität: 29.04.2004 DE 202004006903 U
(71) Anmelder: Heinz Kettler GmbH & Co. KG, 59469 Ense (DE)
(72) Erfinder: Kettler, Heinz, 59469 Ense (DE); Rocholl, Reinhard, 59494 Soest (DE); Kettler, Joachim, 59469 Ense (DE)
(74) Vertreter: Graefe, Jörg

(57) **Zusammenfassung**

Einklappbarer Rahmen für ein Dreirad, Laufrad oder Kinderfahrrad, umfassend:
- ein vorderes Rahmenteil (1), an welchem Vorderräder (5) zumindest mittelbar befestigbar sind,
- ein hinteres Rahmenteil (2), an welchem Hinterräder (11) befestigbar sind,
- ein Schwenkgelenk (3) mit einem vorderen Gelenkteil (31), das am vorderen Rahmenteil (1) angebracht ist und mit einem hinteren Gelenkteil (32), das am hinteren Rahmenteil (2) angebracht ist,
- wobei ein erstes der beiden Gelenkteile (31, 32) eine erste Ausnehmung (35) und ein zweites der beiden Gelenkteile (31, 32) eine zweite Ausnehmung (39) und eine dritte Ausnehmung (40) hat,
- wobei die erste Ausnehmung (35) und die zweite Ausnehmung (39) in einer Gebrauchsstellung des Rahmens in Flucht liegen und die erste Ausnehmung (35) und die dritte Ausnehmung (40) in einer eingeklappten Stellung in Flucht liegen und
- wobei das erste Gelenkteil (31) und das zweite Gelenkteil (32) über einen in den Ausnehmungen (35, 39, 40) verschiebbaren Bolzen (47) in der Gebrauchsstellung und in der eingeklappten Stellung gegeneinander verriegelt sind.

## Beschreibung

Die Erfindung betrifft einen einklappbaren Rahmen für ein Dreirad, Laufrad oder Kinderfahrrad, wobei der Rahmen ein vorderes Rahmenteil hat, an welchem Vorderräder zumindest mittelbar befestigbar sind und ein hinteres Rahmenteil hat, an welchem Hinterräder befestigt werden können. Ein Schwenkgelenk mit einem vorderen Gelenkteil und einem hinteren Gelenkteil verbindet das vordere und das hintere Rahmenteil, wobei das vordere Gelenkteil an dem vorderen Rahmenteil angebracht ist und das hintere Gelenkteil an dem hinteren Rahmenteil angebracht ist.

Ein derartiger Rahmen ist bekannt von einem Dreirad, welches von der Firma Radio Flyer unter der Bezeichnung "#21 Ready To Ride Trike" angeboten wird. Das Dreirad kann aus einer Gebrauchsstellung eingeklappt werden, um in eine kompakte, platzsparende Stellung gebracht zu werden. Das Gelenk und der Verriegelungsmechanismus für das Gelenk sind jedoch aufwändig gestaltet. Das bekannte Dreirad weist nämlich ein Gelenk aus verschiedenen gegeneinander verschwenkbaren Blechteile auf, die um verschiedene Schwenkachsen gegeneinander verschwenkbar sind. Über einen Haken werden die beiden Rahmenteile in der Gebrauchsstellung gegeneinander verrastet.

Die Herstellung des Gelenks ist aufwändig in der Montage und in der Lagerhaltung.

Hier setzt die vorliegende Erfindung an.

Der vorliegenden Erfindung liegt die Aufgabe zugrunde, einen Rahmen für ein Dreirad, Laufrad oder Kinderfahrrad vorzuschlagen, der ein Gelenk zwischen einem ersten Rahmenteil und einem zweiten Rahmenteil hat, welches konstruktiv einfach ist und über einen einfachen Verriegelungsmechanismus verfügt.

Diese Aufgabe wird durch einen Rahmen gemäß Anspruch 1 gelöst. Bei einem erfindungsgemäßen Rahmen weist ein erstes der beiden Gelenkteile, nämlich des vorderen und des hinteren Gelenkteils, eine erste Ausnehmung und das zweite der beiden Gelenkteile eine zweite Ausnehmung und eine dritte Ausnehmung auf. Dabei sind die erste Ausnehmung und die zweite Ausnehmung in einer Gebrauchsstellung des Rahmens in Flucht zueinander, während die erste Ausnehmung die dritte Ausnehmung in einer eingeklappten Stellung in Flucht zueinander liegen. Das erste Gelenkteil und das zweite Gelenkteil können dann über einen in den Ausnehmungen verschiebbaren Bolzen in der Gebrauchsstellung und in der eingeklappten Stellung gegeneinander verriegelt werden. Das Schwenkgelenk des erfindungsgemäßen Rahmens weist nur eine Schwenkachse auf. Der erfindungsgemäße Rahmen mit dem Schwenkgelenk ist konstruktiv einfacher als der bekannte Rahmen und weist insbesondere keine sicherheitstechnisch bedenklichen Klemm- oder Scherstellen auf. Der Rahmen ist daher insbesondere auch für Fahrzeuge geeignet, die von Kindern benutzt werden.

Vorteilhaft ist der Bolzen bei einem erfindungsgemäßen Rahmen parallel zu einer Schwenkachse des Gelenks verschiebbar. Grundsätzlich ist es aber auch denkbar, dass der Bolzen in einem rechten Winkel zur Schwenkachse verschiebbar ist. In der Gebrauchsstellung und der eingeklappten Stellung kann der Bolzen von einer Feder in den jeweils zwei fluchtenden Ausnehmungen gehalten werden. Damit ist eine selbsttätige Entriegelung des Gelenks nicht möglich. Andererseits ermöglicht die Feder vorteilhaft eine selbsttätige Verriegelung des Gelenks in der Gebrauchsstellung und/oder der eingeklappten Stellung.

Die zweite und die dritte Ausnehmung können über einen Führungsschlitz miteinander verbunden sein. Die Ausnehmungen sind dann vorteilhaft als Aufweitungen des Führungsschlitzes vorgesehen. Diese Aufweitungen können sich dann insbesondere an den Enden des Führungsschlitzes befinden.

Gemäß der Erfindung kann der Bolzen einen ersten Abschnitt aufweisen, der in der Gebrauchsstellung und in der eingeklappten Stellung in die zwei jeweils fluchtenden Ausnehmungen eingreift. Der Bolzen kann ferner einen gegenüber dem ersten Abschnitt abgesetzten zweiten Abschnitt aufweisen, der in Stellungen des Rahmens zwischen der Gebrauchsstellung und der eingeklappten Stellung in den Führungsschlitz eingreift.

Bei einem erfindungsgemäßen Rahmen kann eines der beiden Gelenkteile eine Aufnahme haben, in welcher das andere Gelenkteil schwenkbar angeordnet ist.

Ferner kann das Schwenkgelenk eines erfindungsgemäßen Rahmens ein Halteteil umfassen, in welchem der Bolzen verschiebbar gelagert ist. In dem Halteteil kann dann eine Ausnehmung vorgesehen sein, die in Flucht mit der ersten Ausnehmung liegt und in welcher der Bolzen und die Feder angeordnet sind.

Ein Dreirad mit einem erfindungsgemäßen Rahmen ist anhand der Zeichnung näher beschrieben. Darin zeigt
- Fig. 1: das Dreirad mit dem Rahmen in Gebrauchsstellung,
- Fig. 2: das Dreirad mit dem Rahmen in eingeklappter Stellung,
- Fig. 3: einen Schnitt durch das Schwenkgelenk und
- Fig. 4: eine Explosionsdarstellung des Schwenkgelenks mit angrenzenden Teilen des Rahmens.

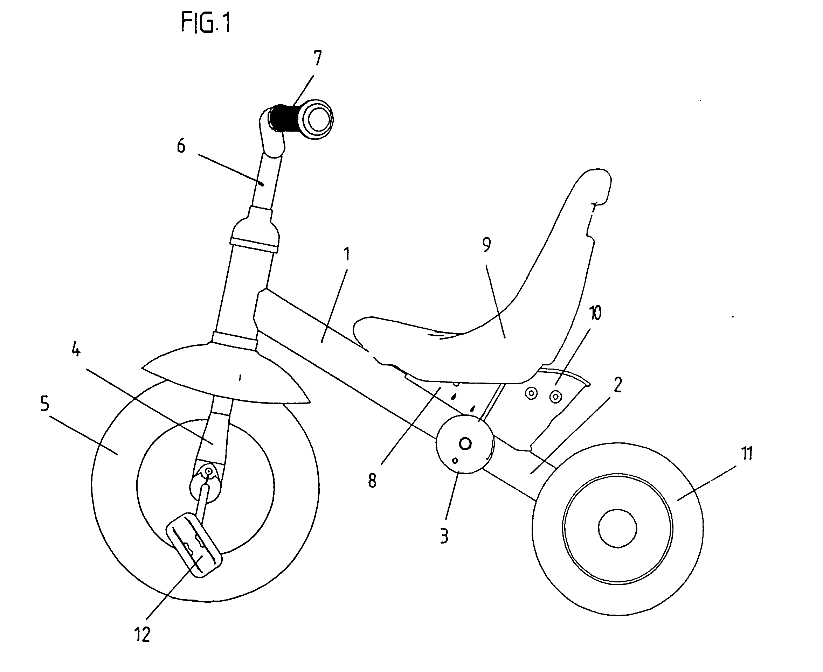

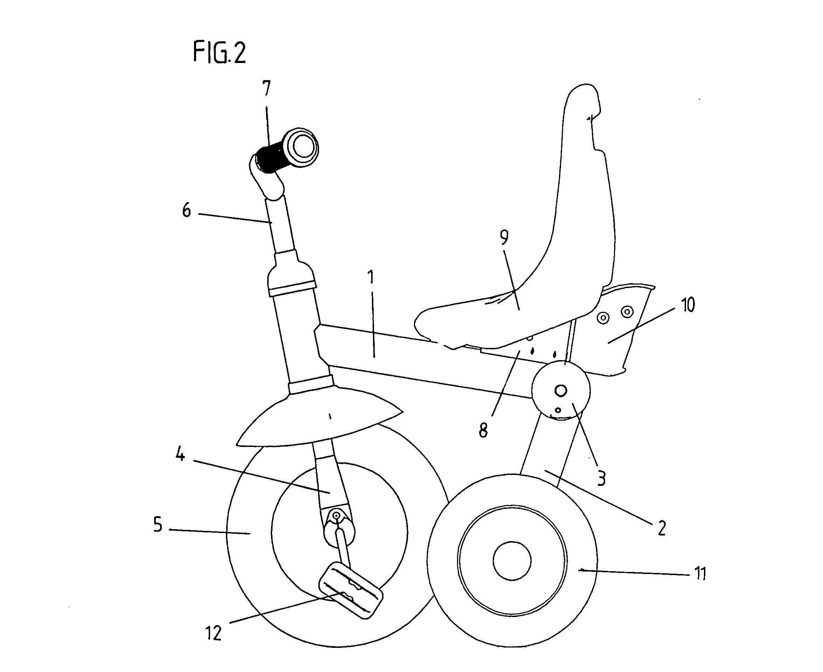

Das in den Fig. 1 und 2 dargestellte Dreirad weist einen Rahmen aus einem vorderen Rahmenteil 1 und einem hinteren Rahmenteil 2 auf, die über ein Schwenkgelenk 3 miteinander verbunden sind. In dem vorderen Rahmenteil ist eine Gabel 4 drehbar gelagert. An der Gabel 4 sind Vorderräder 5 befestigt. Am oberen Ende der Gabel 4 ist eine Lenkerstange 6 und ein Lenker 7 vorgesehen. An dem vorderen Rahmenteil ist ferner ein mehrfach abgewinkeltes Blech 8 angebracht, an welchem ein Sitz 9 befestigt ist. Das mehrfach abgewinkelte Blech 8 hat eine Aufnahme für eine Haltevorrichtung 10, in welcher eine Schubstange (nicht dargestellt) eingesetzt werden kann.

Von dem Schwenkgelenk 3 ausgehend verzweigt sich das hintere Rahmenteil 2, so dass es zwei hintere Enden aufweist. An diesen hinteren Enden sind Räder 11 angebracht, welche die Hinterräder des Dreirads bilden. Über Pedale 12 am Vorderrad kann das Dreirad angetrieben werden.

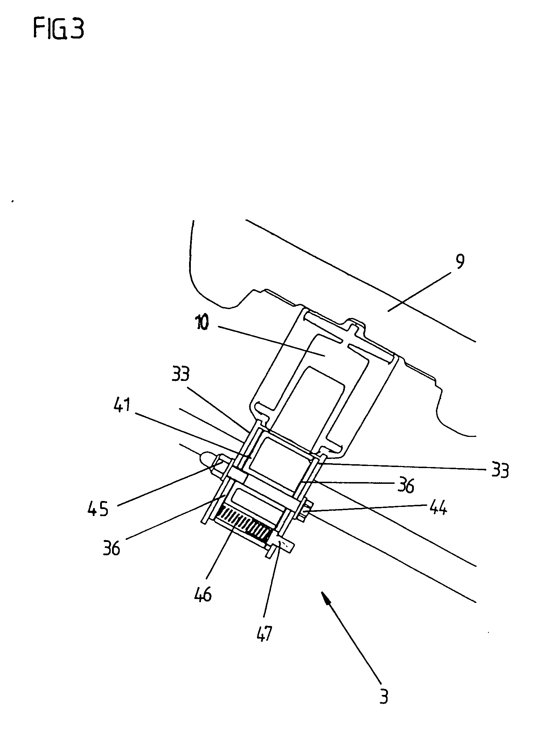

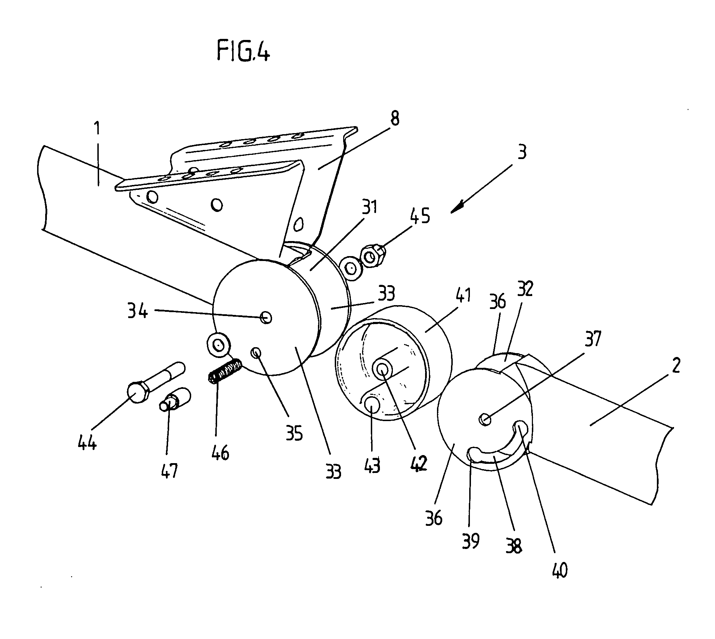

Im Folgenden wird anhand der Fig. 3 und 4 das Schwenkgelenk des Dreirades beschrieben. Das Schwenkgelenk 3 umfasst ein vorderes Gelenkteil 31 und ein hinteres Gelenkteil 32. Das vordere Gelenkteil 31 ist am hinteren Ende des vorderen Rahmenteils 1 angebracht. Das hintere Gelenkteil 32 ist dagegen am vorderen Ende des hinteren Rahmenteils 2 angebracht.

Das vordere Gelenkteil 31 weist zwei beabstandet und parallel zueinander angeordnete Kreisschreiben 33 auf, die jeweils eine zentrale und zueinander fluchtende Bohrungen 34 haben. Eine der Kreisscheiben 31 hat ferner noch eine erste exzentrische Bohrung 35, welche eine erste Ausnehmung bildet.

Das zweite Gelenkteil 32 weist ebenfalls zwei parallel zueinander und beabstandet voneinander angeordnete Kreisscheiben 36 auf. Diese Kreisscheiben 36 haben ebenfalls miteinander fluchtende zentrale Bohrungen 37. In der einen Kreisscheibe 36 des zweiten Gelenkteils 32 ist ein Führungsschlitz 38 vorgesehen, an dessen Enden eine zweite Bohrung 39 und an dessen anderen Ende eine dritte Bohrung 40 vorgesehen sind, die eine zweite Ausnehmung und eine dritte Ausnehmung bilden. Die zweite Bohrung 39 ist so angeordnet, dass sie in der Gebrauchsstellung des Rahmens mit der ersten Bohrung 35 am ersten Gelenkteil 31 fluchtet. Die zweite Bohrung 40 dagegen fluchtet mit der ersten Bohrung 35 des ersten Gelenkteils 31 in der eingeklappten Stellung des Rahmens.

Der Abstand der nach außen weisenden Flächen der beiden Kreisscheiben 36 des zweiten Gelenkteils 32 ist so bemessen, dass er kleiner oder gleich dem Abstand der nach innen weisenden Flächen der Kreisscheiben 33 des ersten Gelenkteils ist. Die beiden Kreisscheiben 33 des ersten Gelenkteils bilden dadurch eine Aufnahme, in welche das zweite Gelenkteil 32 eingesetzt ist. Die zentralen Bohrungen 34 der Kreisscheiben 33 des ersten Gelenkteils 31 fluchten dabei mit den zentralen Bohrungen 37 der Kreisscheiben 36 des zweiten Gelenkteils 32.

Das Schwenkgelenk 3 weist ferner ein als Haltemittel 41 bezeichnetes Kunststoffspritzgussteil auf, welches im Wesentlichen die Form eines einseitig geschlossenen Hohlzylinders hat. Dieser Hohlzylinder weist auf seiner geschlossenen Seite eine zentrale Bohrung auf, an welche innen eine Hülse 42 angesetzt ist. Ferner ist eine Hülse 43 auf der Innenseite in den Innenraum des Hohlzylinders eingesetzt. Das Haltemittel 41 ist zwischen den beiden Scheiben 36 des zweiten Gelenkteils 32 eingesetzt, wobei die zentrale Bohrung 37 mit der Hülse 42 fluchtet.

Das Haltemittel 41 ist zwar zwischen den Scheiben 36 des zweiten Gelenkteils 32 angeordnet, ist jedoch dennoch drehfest in Bezug auf das erste Gelenkteil 31. In Bezug auf das erste Gelenkteil 31 ist das Haltemittel 41 so geordnet, dass die Hülse 43 in Flucht mit der ersten Bohrung 35 ist, unabhängig von der Stellung des Rahmens. Mittels einer Schraube 44, die durch die zentralen Bohrungen 34, 37 der Kreisscheiben 33 beziehungsweise 36 und durch die zentrale Hülse 42 des Haltemittels 41 hindurch gesteckt ist und die mittels einer Mutter 45 gesichert ist, wird das Schwenkgelenk zusammengehalten.

In der Hülse 43 des Haltemittels 41 ist zum einen eine Feder 46 und zum anderen ein Bolzen 47 eingesetzt. Der Bolzen hat dabei einen ersten Abschnitt, welcher der Feder zugewandt ist und einen zweiten Abschnitt, der von dem ersten Abschnitt abgesetzt ist. Der erste Abschnitt hat einen Durchmesser, der dem Innendurchmesser, der zweiten Bohrung 39 und der dritten Bohrung 40 entspricht, so dass der Bolzen in diese Bohrungen 39, 40 eingeführt werden kann. Der zweite Abschnitt hat dagegen einen Durchmesser, der so bemessen ist, dass der zweite Abschnitt in den Schlitz 38 der Kreisscheibe 36 eingreifen und die erste Bohrung 35 durchgreifen kann.

In der Gebrauchsstellung des Rahmens und in der eingeschwenkten Stellung des Rahmens wird der Bolzen 41 mit seinem ersten Abschnitt und dem zweiten Abschnitt durch die zweite Bohrung 39 beziehungsweise die dritte Bohrung 40 eingeschoben. Der zweite Abschnitt ragt dann durch die erste Bohrung 35 hindurch. Der Absatz zwischen dem ersten und dem zweiten Abschnitt liegt an dem Rand der ersten Bohrung 35 an. Zum Verschwenken des Rahmens kann dann der Bolzen 47 von außen gegen den Druck der Feder 46 nach innen gedrückt werden. Dadurch wird der Bolzen mit seinem ersten Abschnitt aus der zweiten Bohrung 39, beziehungsweise der dritten Bohrung 40 herausgehoben. Das Schwenkgelenk 43 ist dann entriegelt. Das erste Rahmenteil 1 kann dann gegen das zweite Rahmenteil 2 verschwenkt werden. Während des Verschwenkens beziehungsweise in einer Stellung zwischen der Gebrauchsstellung und der eingeklappten Stellung liegt der erste Abschnitt des Bolzens 47 auf dem Rand des Führungsschlitzes 38, während der zweite Abschnitt durch den Führungsschlitz 38 und die erste Bohrung 35 hindurch greift.

## Patentansprüche

1. Einklappbarer Rahmen für ein Dreirad, Laufrad oder Kinderfahrrad, umfassend:
- ein vorderes Rahmenteil (1), an welchem Vorderräder (5) zumindest mittelbar befestigbar sind,
- ein hinteres Rahmenteil (2), an welchem Hinterräder (11) befestigbar sind,
- ein Schwenkgelenk (3) mit einem vorderen Gelenkteil (31), das am vorderen Rahmenteil (1) angebracht ist und mit einem hinteren Gelenkteil (32), das am hinteren Rahmenteil (2) angebracht ist,
- wobei ein erstes der beiden Gelenkteile (31, 32) eine erste Ausnehmung (35) und ein zweites der beiden Gelenkteile (31, 32) eine zweite Ausnehmung (39) und eine dritte Ausnehmung (40) hat,
- wobei die erste Ausnehmung (35) und die zweite Ausnehmung (39) in einer Gebrauchsstellung des Rahmens in Flucht liegen und die erste Ausnehmung (35) und die dritte Ausnehmung (40) in einer eingeklappten Stellung in Flucht liegen und
- wobei das erste Gelenkteil (31) und das zweite Gelenkteil (32) über einen in den Ausnehmungen (35, 39, 40) verschiebbaren Bolzen (47) in der Gebrauchsstellung und in der eingeklappten Stellung gegeneinander verriegelt sind.

2. Rahmen nach Anspruch 1, **dadurch gekennzeichnet, dass** der Bolzen (47) parallel zu einer Schwenkachse des Gelenks (3) verschiebbar ist.

3. Rahmen nach Anspruch 1 oder 2, **dadurch gekennzeichnet, dass** der Bolzen in der Gebrauchstellung und der eingeklappten Stellung von einer Feder (46) in den jeweils zwei fluchtenden Ausnehmungen (35, 39; 35, 40) gehalten ist.

4. Rahmen nach einem der Ansprüche 1 bis 3, **dadurch gekennzeichnet, dass** die zweite Ausnehmung (39) und die dritte Ausnehmung (40) über einen Führungsschlitz (38) miteinander verbunden sind.

5. Rahmen nach Anspruch 4, **dadurch gekennzeichnet, dass** die Ausnehmungen (39, 40) Aufweitungen des Führungsschlitzes (38) sind.

6. Rahmen nach Anspruch 5, **dadurch gekennzeichnet, dass** die Aufweitungen an den Enden des Führungsschlitzes (38) angeordnet sind.

7. Rahmen nach einem der Ansprüche 1 bis 6, **dadurch gekennzeichnet, dass** der Bolzen (47) einen ersten Abschnitt aufweist, der in der Gebrauchsstellung und in der eingeklappten Stellung in die zwei jeweils fluchtenden Ausnehmungen (35, 40; 35, 39) eingreift.

8. Rahmen nach einem der Ansprüche 4 bis 6 und Anspruch 7, **dadurch gekennzeichnet, dass** der Bolzen (47) einen gegenüber dem ersten Abschnitt abgesetzten zweiten Abschnitt aufweist, der in Stellungen des Rahmens zwischen der Gebrauchsstellung und der eingeklappten Stellung in den Führungsschlitz (38) eingreift.

9. Rahmen nach einem der Ansprüche 1 bis 8, **dadurch gekennzeichnet, dass** eines der beiden Gelenkteile (31) eine Aufnahme hat, in welcher das andere Gelenkteil (32) schwenkbar angeordnet ist.

10. Rahmen nach einem der Ansprüche 1 bis 9, **dadurch gekennzeichnet, dass** das Schwenkgelenk (3) ein Halteteil (41) aufweist, in welchem der Bolzen (47) verschiebbar gelagert ist.

11. Rahmen nach Anspruch 10, **dadurch gekennzeichnet, dass** das Halteteil (41) eine Ausnehmung (43) hat, die in Flucht mit der ersten Ausnehmung (35) liegt und in welcher der Bolzen 847) und die Feder (46) angeordnet sind.
